Europäisches Patentamt

European Patent Office

Office européen des brevets

(19)

(11) Veröffentlichungsnummer: **0 163 012 B1**

## (12) EUROPÄISCHE PATENTSCHRIFT

(45) Veröffentlichungstag der Patentschrift: 15.05.91

(51) Int. Cl.⁵: **B23P 19/06, E21B 19/16**

(21) Anmeldenummer: 85102217.8

(22) Anmeldetag: 28.02.85

(54) **Muffenverschraubungsmaschine für Rohre.**

(30) Priorität: 22.03.84 DE 3410561

(43) Veröffentlichungstag der Anmeldung:
04.12.85 Patentblatt 85/49

(45) Bekanntmachung des Hinweises auf die
Patenterteilung:
15.05.91 Patentblatt 91/20

(84) Benannte Vertragsstaaten:
**AT FR GB IT**

(56) Entgegenhaltungen:
DE-A- 2 124 629     DE-A- 2 559 674
GB-A- 2 035 869     GB-A- 2 123 328
NL-A- 7 903 701     US-A- 3 298 089
US-A- 4 092 881

(73) Patentinhaber: **Weatherford Oil Tool GmbH
Hainhäuser Weg 150
W-3012 Langenhagen 1(DE)**

(72) Erfinder: **Reinholdt, Bernd
Bodeweg 85
W-3012 Langenhagen 1(DE)**
Erfinder: **Schulze-Beckinghausen, Jörg E.
Stephanusstrasse 11
W-3008 Garbsen 4(DE)**
Erfinder: **Hellwig, Siegfried
Landwehr 49
W-3057 Neustadt(DE)**

(74) Vertreter: **Arendt, Helmut, Dipl.-Ing.
Alte Dorfstrasse 16
W-3160 Lehrte, OT Arpke(DE)**

## Beschreibung

Die Erfindung betrifft eine horizontale Muffenverschraubungsmaschine zum Verschrauben und Lösen von Muffen-Rohrverbindungen, mit einer auf einem gemeinsamen Grundrahmen befestigten Verschraubungszange und einer Rohrzange (Konterverbindung), von denen die eine lange auf dem Grundrahmen ortsfest und die andere auf dem Grundrahmen längsbeweglich angeordnet ist.

In das Erdreich niedergebrachte Bohrungen, beispielsweise in Öl- und Gasfeldern, werden zum Fördern der flüssigen oder gasförmigen Energieträger verrohrt. Dabei werden einzelne Rohre zur Bildung langer ununterbrochener Rohrstränge miteinander verschraubt. Als Verbindungselemente dienen Rohrmuffen, die vor dem Einbringen in die Bohrung fest mit den Rohren verschraubt werden. Bekannt ist das Verschrauben in vertikaler Rohrposition und das anschließende Einziehen in die Bohrung. Eine hierfür geeignete Vorrichtung ist beispielsweise in der DE-PS 31 38 870 beschrieben.

Ferner sind horizontal arbeitende Verschraubungsmaschinen bekannt, die auch bei Rohrproduzenten verwendet werden könnten.

Ebenso wie bei den Vertikalverschraubungsmaschinen wird nur das Schraubmoment durch Motorkraft aufgebracht. Das Drehmoment und der Drehweg werden von Hand gesteuert. Voraussetzung hierbei ist ferner, daß vor der Durchführung des eigentlichen Verschraubungsvorgangs die Rohrmuffe von Hand angesetzt und, soweit es die Handkraft erlaubt, angezogen wird. Diese Verschraubungsart eignet sich nicht für die Serienfertigung, was insbesondere von Rohrherstellern verlangt wird. Hierfür sind Muffenvorverschraubungsmaschinen entwickelt worden, die den gesamten Verschraubungsvorgang in zwei nacheinander ablaufende Arbeitsvorgänge unterteilen.
Zunächst wird die Muffe mit der Muffenvorverschraubungsmaschine am Rohrende angesetzt und angeschraubt und anschließend durch die eigentliche Verschraubungsmaschine festgeschraubt.

Den DE-PS 26 18 877 und 32 43 027 ist jeweils eine Vorrichtung zum Kontern und Brechen der Gewindeverbindungen zwischen Rohrkörpern von Rohr- und Bohrsträngen sowie Bohrwerkzeugen für Tiefbohrungen als bekannt zu entnehmen. Mit ihrer Hilfe sollen nicht nur die Gewindeverbindungen gekontert und gebrochen, sondern auch vollkommen losgeschraubt und sodann die Rohrkörper zur Durchführung von Wartungsarbeiten im Gewindebereich im eingespannt gehalten Zustand auseinandergefahren werden können. Diese Arbeiten sind weitgehend automatisch durchführbar. Aber auch mit diesen Maschinen ist es nicht möglich, Rohrmuffen anzusetzen und mit den Rohren zu verbinden.

Bei einer Vorrichtung nach der DE-OS 21 24 629 ist ein Spannkopf für die Rohrmuffe vertikal bewegbar angeordnet. Mit dem axial verschiebbaren Spannkopf wird die Muffe einer Zuführeinrichtung entnommen und in die zum Aufschrauben erforderliche Lage gebracht. Anschließend wird das Rohr mit einer von dem Traggestell des Spannkopfes getrennten Spannvorrichtung gegen die Muffe gedrückt. Die für die Ausrichtung des Spannkopfes und zum Aufschrauben vorgesehene Einrichtung ist technisch aufwendig. Ein vollständiges Verschrauben der Muffe mit dem Rohr unter Aufbringung des Enddrehmomentes im Anschluß an das Auf- oder Vorschrauben ist nicht durchführbar.

Alle bekannten Maschinen haben den Nachteil, daß sie einen hohen Durchsatz, das heißt, einen kurzen Takt-Zyklus nicht ermöglichen.

Der Erfindung liegt die Aufgabe zu Grunde, eine Maschine der im Oberbegriff des Patentanspruchs 1 beschriebenen Art so auszubilden, daß nicht nur das Kontern und Brechen und vollständige Losschrauben einer Muffe ermöglicht wird, sondern auch der gesamte Verschraubungsvorgang ohne Unterbrechung, beginnend mit dem Ansetzen der Muffe bis zum festen Verschrauben, in einem Arbeitsgang durchgeführt und dadurch die Taktzeiten erheblich gesenkt werden können. Diese Aufgabe wird nach der Erfindung mit den Merkmalen des kennzeichnenden Teils des Patentanspruchs 1 gelöst. Vorzugsweise ist hierbei die Rohrzange beweglich und die Verschraubungszange ortsfest.

Um sicherzustellen, daß keine nachteiligen Querkräfte, die das Gewinde belasten könnten, entstehen, ist vorgesehen, die Achsen der drehbeweglichen Stützpunkte der vorkragenden Haltearme in der Horizontalebene der Rohrachse anzuordnen.

Die äußeren Enden der Haltearme sind durch Stäbe miteinander verbunden, die ihrerseits in schwingeförmigen Verbindungsstegen der Führungsbuchsen gelagert sind. Von diesen Verbindungsstegen ausgehend greifen die Haltearme unter das zu verschraubende Rohr hindurch. Im tiefsten Punkt stoßen sie aneinander und erhalten dadurch gemeinsam eine V-förmige Gestalt.

Weitere vorteilhafte, den Erfindungsgegenstand weiterbildende Merkmale sind in den Unteransprüchen zu entnehmen.

Die erfindungsgemäß gestaltete Muffenverschraubungsmaschine erübrigt den Einsatz der sonst üblichen Muffenvorschraubmaschine. Der Takt-Zyklus wird auf ein Minimum reduziert, so daß außergewöhnlich hohe Leistungen, zum Beispiel bei kleineren Einheiten über zweihundert vollständige Verschraubungen pro Stunde ermöglicht werden. Die Maschine erlaubt einen vollautomatischen Verschraubungsvorgang mit gesteuerter Gewindeeinfädelung, stufenloser Drehzahlregelung, Drehmomentbegrenzung und einer Reproduzierbarkeit der Verbindungen, sowohl für Verschraubungen mit einer Wegvorgabe und Drehmomentkontrolle als auch mit einer Drehmomentvorgabe und Wegkontrolle. Rohr/Muffen-Toleranzen werden durch die wegabhängige Steuerung und die ausgleichsfähige Aufhängung der Rohrzange kompensiert. Die Maschine ist sowohl für Rohrproduzenten als auch zum Einsatz bei Rohrüberholungen geeignet.

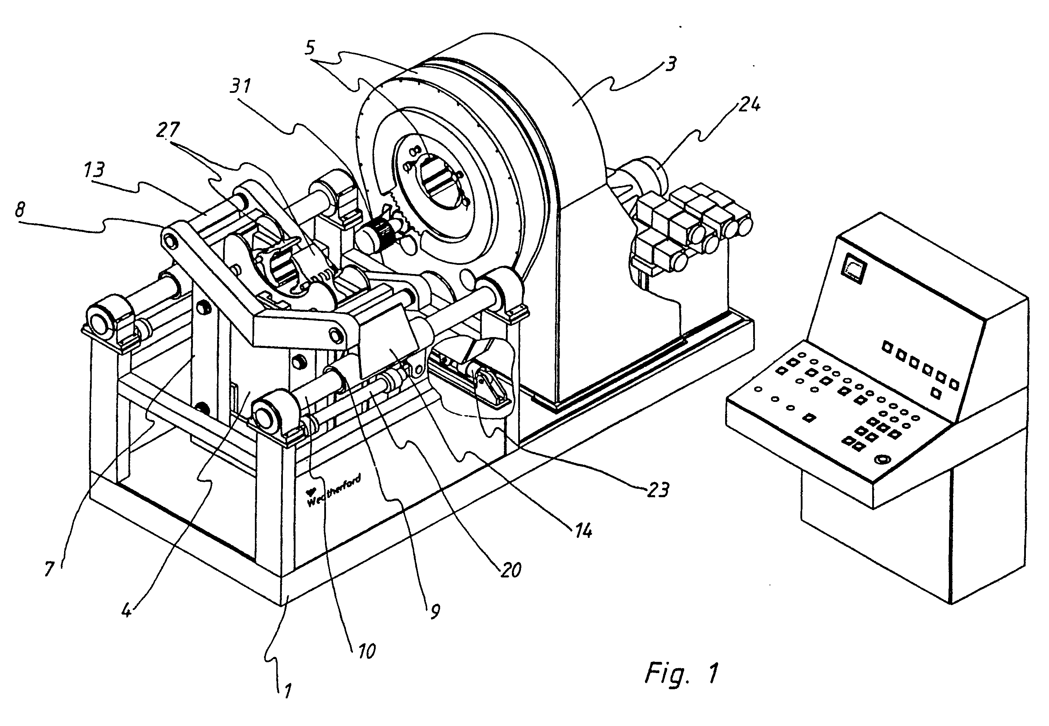

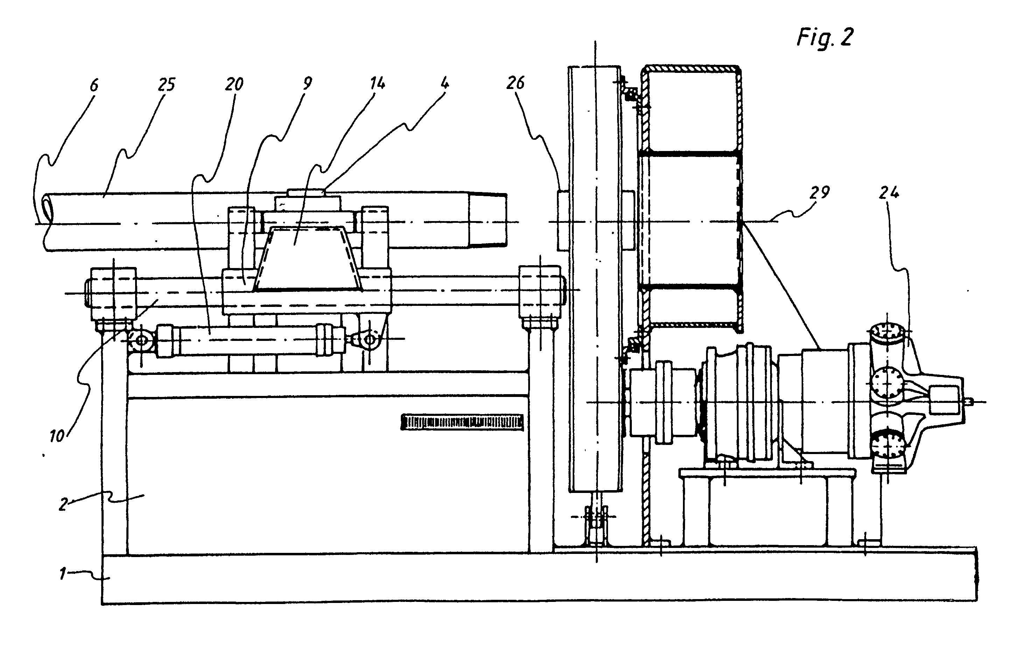

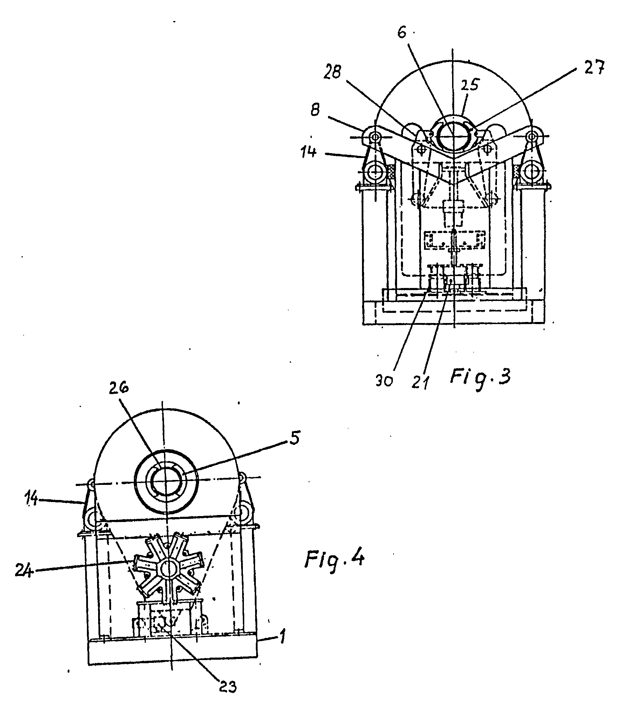

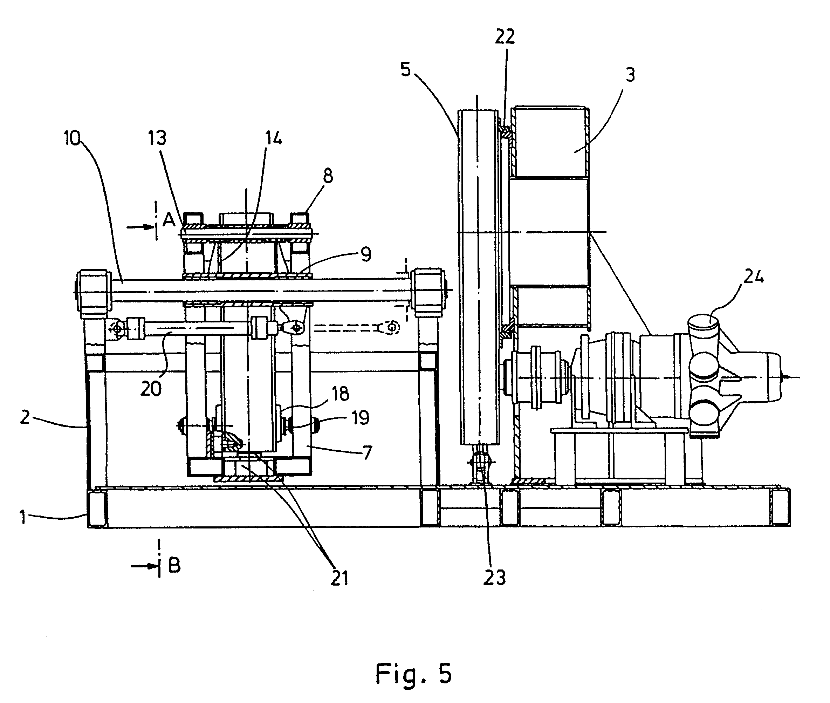

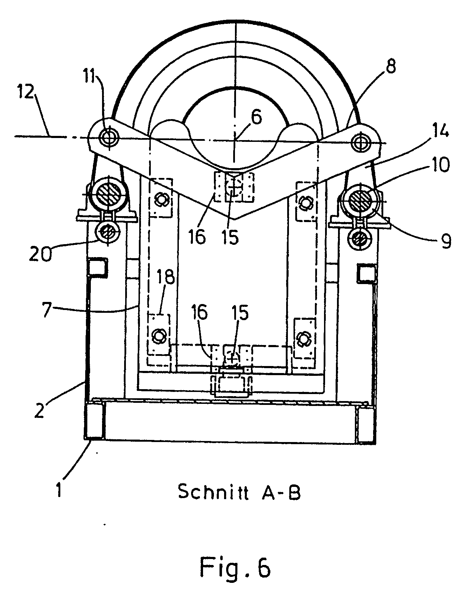

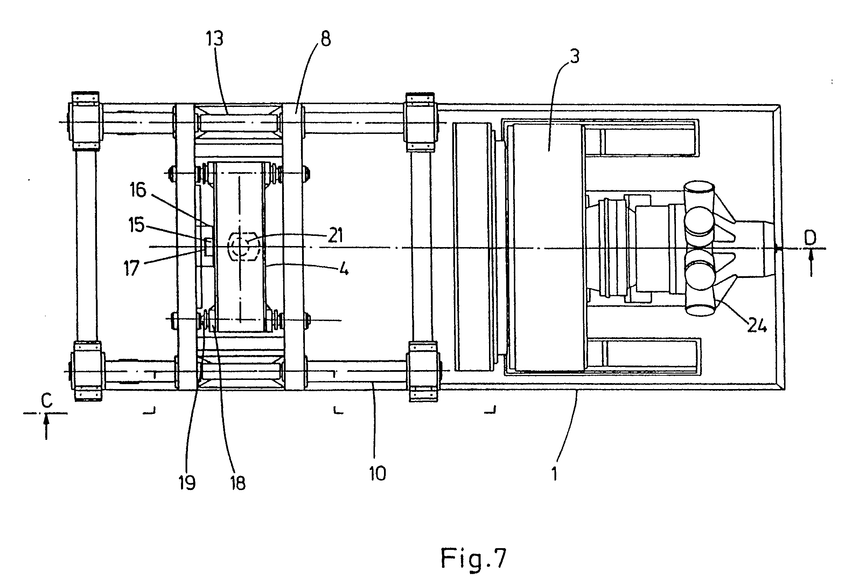

In der Zeichnung ist ein Ausführungsbeispiel der Erfindung schematisch dargestellt und nachstehend erläutert.

Es zeigen:

| | | |
|---|---|---|
| Fig. 1 | | eine schaubildliche Gesamtdarstellung der Muffenverschraubungsmaschine, |
| Fig. 2 | | eine Seitenansicht, teilweise im Schnitt, |
| Fig. 3 | | die Stirnansicht der Rohrzangenseite der Darstellung gemäß Figur 2, |
| Fig. 4 | | die Stirnansicht der Verschraubungszangenseite der Maschine gemäß Figur 2, |
| Fig. 5 | | eine weitere Seitenansicht zum Teil im Schnitt, |
| Fig. 6 | | eine weitere Stirnansicht der Rohrzangenseite und |
| Fig. 7 | | eine Draufsicht. |

In den Figuren der Zeichnung bedeuten die Bezugsziffern im einzelnen:

| | |
|---|---|
| 1 | Grundrahmen |
| 2 | Maschinengehäuse für Rohrzange |
| 3 | Maschinengehäuse für Verschraubungszange |
| 4 | Rohrzange (Kontervorrichtung) |
| 5 | Verschraubungszange |
| 6 | Rohrachse |
| 7 | Führungsrahmen |
| 8 | Haltearme |
| 9 | Führungsbuchsen |
| 10 | Gleitführung |
| 11 | Stützachsen der Haltearme |
| 12 | Horizontalebene |
| 13 | Verbindungs- und Stützstäbe |
| 14 | schwingenförmige Verbindungsstege |
| 15 | Führungsrollen der Rohrzange |
| 16 | Führungsstücke am Führungsrahmen |
| 17 | Führungsnuten |
| 18 | Führungsplatten |
| 19 | Führungsbolzen |
| 20 | Vorschubzylinder |
| 21 | Hubzylinder |
| 22 | Kugeldrehkranz |
| 23 | Zugmeßdose |
| 24 | hydrostatisches Getriebe |
| 25 | Rohr |
| 26 | Rohrmuffe |
| 27 | Spannbacken |
| 28 | Spannhebel |
| 29 | Muffenachse |
| 30 | Kompensationselemente (Federn) für das Rohrzangengewicht |
| 31 | Bremsvorrichtung für Verschraubzange |

Zum Verschrauben eines Rohres 25 mit einer Muffe 26 werden die Verschraubungszange 5 und die Rohrzange 4 (Kontervorrichtung) hydraulisch in ihre Ausgangsstellungen gefahren und mit den entsprechenden Spannbacken bestückt. Ein nicht dargestellter Hubrechen führt ein Rohr 25 in die Rohrzange 4, wobei die Rohrvorderkante genau positioniert wird. Dann wird das Rohr hydraulisch auf den voreingestellten Wert (Druck) gespannt.

Ein ebenfalls nicht dargestelltes Zufuhrsystem an der Rückseite der Verschraubungszange 5 fördert eine gefetteteMuffe 26 in die Verschraubungszange 5, die mit Einleitung des Spannvorgangs zu rotieren beginnt.

Zum Einfädeln des Rohrendes in die Muffe 26 wird die gesamte Rohrzange im Führungsrahmen 7 durch den Hubzylinder 21 angehoben bis die Rohrachse 6 und die Muffenachse 29 miteinander fluchten. Die Rohrzange 4 mit dem Rohr bewegt sich dann durch die Betätigung der Vorschubzylinder 20, versehen mit einer Proportionalgeschwindigkeitssteuerung, auf die Muffe 26 zu. Während des Vorschubs wird beispielsweise eine Lichtschranke durchfahren, die den Referenzpunkt für die elektronische Wegmessung vorgibt. Hierdurch können Toleranzen aus der Positionierung kompensiert werden.

Unmittelbar bevor sich die Gewindespitzen von Rohr und Muffe berühren wird durch Einfahren des Zylinders 21 die Rohrzange 4 abgesenkt. Dadurch kommen die Gewinde von Rohr und Rohrmuffe einseitig in Kontakt, d. h. die untere Partie des Rohrgewindes greift in das Muffengewinde. Durch die Verschraubungsdrehungen wird das Rohr weiter in die Muffe hineingezogen.Dabei hebt sich zwangsläufig das Rohr über die Gewindekegel der Verbindungsverschraubung an bis abermals die Achsen der beiden zu verschraubenden Teile miteinander in einer Linie liegen. Bei geeigneten Gewinden ist auch ein direktes Verschrauben ohne vorheriges Absenken der Rohrzange möglich.

Die weitere Verschraubung wird durch die elektronische Wegmessung gesteuert und bis zum Ende der definierten Wegvorgabe durchgeführt. Es ist ebenso eine kinematische Umkehr der Anordnung möglich, d. h. die Rohrzange 4 kann ortsfest und die Verschraubungszange 5 verfahrbar und so aufgehängt sein, daß sie Ausgleichsbewegungen durchführen kann.

Die Haltearme 8 des Führungsrahmens 7 sind durch Verbindungsstäbe 13 miteinander verbunden und gleichzeitig über diese auf den schwingenförmigen Verbindungsstegen 14 abgestützt. Durch eine entsprechende Lagerung sind sie drehbeweglich und erlauben eine seitliche Verschiebung der Führungsarme. Die Achsen 11 der Verbindungs- und Stützstäbe liegen in der Horizontalebene 12 der Rohrachse 6. Durch diese Lage werden das Gewinde belastende Querkräfte während des Verschraubungsvorgangs vermieden, da auf den einen Anlenkungspunkt reiner Zug und auf den gegenüberliegenden eine reine Druckkraft wirkt.

Die Verschraubungszange 5 ist über einen Kugeldrehkranz 22 pendelnd am Maschinengehäuse 3 aufgehängt, so daß am unteren Ende der Verschraubungszange das Drehmoment über die Zugmeßdose 23 gemessen werden kann. Die Verschraubungszange 5 kann jedoch auch in das Maschinengehäuse 3 integriert werden. In diesem Fall wird das Drehmoment über eine Meßwelle gemessen.

Mit Hilfe von Proportionalventilen sind die Verschraubgeschwindigkeit und die Haltezeit frei programmierbar. Nach Durchfahren der vorgegebenen Wegstrecke oder alternativ nach Erreichen des voreingestellten Drehmoments schaltet der hydraulische Motor ab und die Muffenspannung wird im Gegenlauf gelöst. Die Rohrzange fährt in die Ausgangsstellung zurück, gleichzeitig werden die Spannbacken gelöst und das Rohr mit der daran befestigten Muffe freigegeben.

In dem dargestellten Beispiel ist ein Radialkolbenmotor mit verstellbarer Exzentrizität, Untersetzungsgetriebe sowie Steuerorgane für den Verschraubungsantrieb vorgesehen. Es besteht jedoch ebenso die Möglichkeit, den elektrohydraulischen Antrieb durch einen regelbaren Gleichstrommotor zu ersetzen .

Die Verschraubungsmaschine ermöglicht einen vollautomatischen Arbeitsablauf, beginnend mit der Zuführung von Rohren und Muffen über die nicht dargestellten Zuführens- bzw. Handingssysteme. Sie bringt eine ganz erhebliche Senkung der Taktzeiten und ist dadurch für die Serienfertigung von ganz besonderer Bedeutung.

**Ansprüche**

1. Horizontale Muffenverschraubungsmaschine zum Verschrauben und Lösen von Muffen-Rohrverbindungen, mit einer auf einem gemeinsamen Grundrahmen befestigten Verschraubungszange und einer Rohrzange (Kontervorrichtung), von denen die eine Zange auf dem Grundrahmen ortsfest und die andere auf dem Grundrahmen längsbeweglich angeordnet sind, dadurch gekennzeichnet, daß die längsbewegliche Zange entweder als Rohrzange (4) oder als Verschraubungszange (5) zusätzlich horizontal quer zur Längsachse (6) des Rohres und vertikal ausgleichsbeweglich auf dem Grundrahmen (1) angeordnet ist und hierfür in einem Führungsrahmen (7) vertikal verschiebbar gelagert und mit diesem quer zur Rohrachse (6) bewegbar ist, wobei der Führungsrahmen (7) über seitlich vorkragende Haltearme (8) drehbeweglich auf Führungsbuchsen (9) einer in Richtung der Rohrachse weisenden Gleitführung (10) abgestützt ist.

2. Muffenverschraubungsmaschine nach Anspruch 1, dadurch gekennzeichnet, daß die Rohrzange (4) beweglich und die Verschraubungszange (5) ortsfest angeordnet sind.

3. Muffenverschraubungsmaschine nach Anspruch 2, dadurch gekennzeichnet, daß die Rohrzange (4) mit Elementen zur Kompensation des Rohrzangengewichts beim vertikalen Absenken ausgerüstet ist.

4. Muffenverschraubungsmaschine nach Anspruch 3, dadurch gekennzeichnet, daß zur Kompensation des Rohrzangengewichts Federn (30) bzw. hydraulisch wirkende Elemente eingesetzt sind.

5. Muffenverschraubungsmaschine nach einem der Ansprüche 1 bis 4, dadurch gekennzeichnet, daß die Achsen (11) der drehbeweglichen Stützelemente der Haltearme (8) in der Horizontalebene (12) der Rohrachse (6) liegen.

6. Muffenverschraubungsmaschine nach einem der Ansprüche 1 bis 5, dadurch gekennzeichnet, daß die äußeren Enden der Haltearme (8) durch Stäbe (13) miteinander verbunden sind, welche in schwingenförmigen Verbindungsstegen (14) der Führungsbuchsen (9) gelagert sind.

7. Muffenverschraubungsmaschine nach einem der Ansprüche 1 bis 6, dadurch gekennzeichnet, daß die Haltearme (8) unter das zu verschraubende Rohr hinweggreifend V-förmig ausgebildet sind.

8. Muffenverschraubungsmaschine nach einem der Ansprüche 1 bis 7, dadurch gekennzeichnet, daß die Rohrzange (4) ein massives Stahlgehäuse aufweist, welches zur Aufnahme der Spannbacken, Spannhebel und Spannzylinder dient.

9. Muffenverschraubungsmaschine nach einem der Ansprüche 1 bis 8, dadurch gekennzeichnet, daß die Rohrzange (4) mit Führungsrollen (15) versehen ist, die in am Führungsrahmen (7) angebrachte Führungsstücke (16) mit vertikalen Führungsnuten (17) greifen.

10. Muffenverschraubungsmaschine nach einem der Ansprüche 1 bis 9, dadurch gekennzeichnet, daß die Rohrzange (4) mit Führungsplatten (18) an ihren in Verschieberichtung weisenden Seiten versehen ist, mit welchen sie an Führungsbolzen (19) des Führungsrahmens (7) anliegt.

11. Muffenverschraubungsmaschine nach einem der Ansprüche 1 bis 10, dadurch gekennzeichnet, daß der Führungsrahmen (7) durch hydraulische Vorschubzylinder (20) auf der Gleitführung (10) verschiebbar ist.

12. Muffenverschraubungsmaschine nach einem der Ansprüche 1 bis 11, dadurch gekennzeichnet, daß unterhalb der Rohrzange (4) ein hydraulischer Hubzylinder (21) für deren vertikale Verstellung innerhalb des Führungsrahmens (7) angeordnet ist.

13. Muffenverschraubungsmaschine nach einem der Ansprüche 1 bis 12, dadurch gekennzeichnet, daß die Verschraubungszange (5) über einen Kugeldrehkranz (23) pendeln an einem auf dem Grundrahmen (1) starr angeordneten Maschinengehäuse (3) befestigt ist.

14. Muffenverschraubungsmaschine nach einem der Ansprüche 1 bis 13, dadurch gekennzeichnet, daß das untere Ende der Verschraubungszange (5) mit einer Zugmeßdose (23) zur Drehmomentmessung versehen ist.

15. Muffenverschraubungszange nach einem der Ansprüche 1 bis 14, dadurch gekennzeichnet, daß die Verschraubungszange (5) durch ein hydrostatisches Getriebe (24) antreibbar ist.

16. Muffenverschraubungsmaschine nach einem der Ansprüche 1 bis 14, dadurch gekennzeichnet, daß die Verschraubungszange (5) durch einen regelbaren Gleichstrommotor antreibbar ist.

17. Muffenverschraubungsmaschine nach einem der Ansprüche 1 bis 15, dadurch gekennzeichnet, daß die Verschraubungszange (5) mittels elektrisch betätigbaren Stellantriebs auf Niveau regelbar ist.

18. Muffenverschraubungsmaschine nach einem der Ansprüche 1 bis 17, dadurch gekennzeichnet, daß zur Festlegung eines vorgegebenen Verschraubungsweges Signalgeber vorgesehen sind.

19. Muffenverschraubungsmaschine nach Anspruch 18, dadurch gekennzeichnet, daß als Signalgeber eine Lichtschrankeneinrichtung eingesetzt ist.

20. Muffenverschraubungsmaschine nach Anspruch 18, dadurch gekennzeichnet, daß als Signalgeber ein Endlagenschalter eingesetzt ist.

21. Muffenverschraubungsmaschine nach einem der Ansprüche 1 bis 20, dadurch gekennzeichnet, daß die Verschraubzange mit einer durch Motorkraft antreibbaren Bremsvorrichtung (31) zur Einleitung der Muffeneinspannung über das in der Verschraubzange angeordnete Spannsystem ausgerüstet ist, wobei die Bremsvorrichtung nach vollzogener Einleitung der Muffeneinsparung abschaltbar ist.

22. Muffenverschraubungsmaschine nach Anspruch 21, dadurch gekennzeichnet, daß die Motorkraft durch einen Hydraulikmotor erzeugbar ist.

23. Muffenverschraubungsmaschine nach Anspruch 21, dadurch gekennzeichnet, daß die Motorkraft durch einen Elektromotor erzeugbar ist.

**Claims**

1. A horizontal socket screw-coupling machine for the screw coupling and release of socket/pipe connections, having screw-coupling tongs and pipe tongs (checking device) attached to a common base frame, one of the pairs of tongs being disposed fast on the base frame, the other pair being disposed to move longitudinally thereon, characterized in that the longitudinally movable tongs, either in the form of the pipe tongs (4) or the screw-coupling tongs (5), are disposed to additionally make compensating movements on the base frame (1) horizontally transversely of the longitudinal axis (6) of the tongs and also vertically, to which end said tongs are mounted for vertical displacement in a guide frame (7) and can be moved together therewith transversely of the pipe axis (6), the guide frame (7) bearing rotatably via laterally cantilevered retaining arms (8) on guide bushes (9) of a slideway (10) pointing in the direction of the guide axis.

2. A socket screw-coupling machine according to Claim 1, characterized in that the pipe tongs (4) are disposed movably and the screw-coupling tongs (5) are fixed.

3. A socket screw-coupling machine according to Claim 2, characterized in that the pipe tongs (4) have elements for compensating the weight of the tongs during vertical lowering.

4. A socket screw-coupling machine according to Claim 3, characterized in that springs (30) or hydraulic elements are used to compensate the weight of the pipe tongs.

5. A socket screw-coupling machine according to one of Claims 1 to 4, characterized in that the axes (11) of the rotatable bearing elements of the retaining arms (8) are disposed in the horizontal plane (12) of the pipe axis (6).

6. A socket screw-coupling machine according to one of Claims 1 to 5, characterized in that the outer ends of the retaining arms (8) are interconnected via rods (13) mounted in rocker-shaped connecting webs (14) of the guide bushes (9).

7. A socket screw-coupling machine according to one of Claims 1 to 6, characterized in that the retaining arms (8) are constructed in V-shape and engage below the pipe to be screw-coupled.

8. A socket screw-coupling machine according to one of Claims 1 to 7, characterized in that the pipe tongs (4) have a solid steel casing which receives the clamping jaws, clamping levers and clamping cylinders.

9. A socket screw-coupling machine according to one of Claims 1 to 8, characterized in that the pipe tongs (4) have guide rollers (15) which engage in guide members (16) with vertical guide grooves (17) disposed on the guide frame (7).

10. A socket screw-coupling machine according to one of Claims 1 to 9, characterized in that the pipe tongs (4) have guide plates (18) which are disposed on their sides pointing in the direction of displacement and via which they bear against guide pins (19) of the guide frame (7).

11. A socket screw-coupling machine according to one of Claims 1 to 10, characterized in that the guide frame (7) can be displaced on the slideway (10) by hydraulic feed cylinders (20).

12. A socket screw-coupling machine according to one of Claims 1 to 11, characterized in that disposed below the pipe tongs (4) is a hydraulic lifting cylinder (21) for their vertical adjustment inside the guide frame (7).

13. A socket screw-coupling machine according to one of Claims 1 to 12, characterized in that the screw-coupling tongs are attached swinging via a live ring (23) to a machine casing (3) rigidly disposed on the base frame (1).

14. A socket screw-coupling machine according to one of Claims 1 to 13, characterized in that the lower end of the screw-coupling tongs (5) has a tensiometer (23) for measuring torque.

15. A socket screw-coupling machine according to one of Claims 1 to 14, characterized in that the screw-coupling tongs (5) can be driven by a hydrostatic transmission (24).

16. A socket screw-coupling machine according to one of Claims 1 to 14, characterized in that the screw-coupling tongs (5) can be driven by a variable d.c. motor.

17. A socket screw-coupling machine according to one of Claims 1 to 15, characterized in that the level of the screw-coupling tongs (5) can be adjusted by means of an electrically actuable adjusting drive.

18. A socket screw-coupling machine according to one of Claims 1 to 17, characterized in that signal transmitters are provided to determine a give screw-coupling path.

19. A socket screw-coupling machine according to Claim 18, characterized in that the signal transmitter used is a photoelectric barrier device.

20. A socket screw-coupling machine according to Claim 18, characterized in that the signal transmitter used is an end position switch.

21. A socket screw-coupling machine according to one of Claims 1 to 20, characterized in that the screw-coupling tongs have a motor-driven braking device (31) for initiating socket clamping via the clamping system disposed in the screw-coupling tongs, the braking device being switched off when the initiation of socket clamping has been completed.

22. A socket screw-coupling machine according to Claim 21, characterized in that the driving force can be generated by a hydraulic motor.

23. A socket screw-coupling machine according to Claim 21, characterized in that the driving force can be generated by an electric motor.

## Revendications

1. Machine horizontale de raccordement par vissage à l'aide de manchons, pour raccorder par vissage ou défaire des raccords manchons-tubes, comprenant une pince de raccordement par vissage, fixé sur un bâti de base commun et une pince de tube (dispositif de blocage), dont une pince est disposée de façon fixe sur le bâti de base et l'autre sur le bâti de base de façon longitudinalement mobile, caractérisée en ce que la pince longitudinalement mobile est montée comme mince de tube (4) ou comme pince de raccordement par vissage (5) sur le cadre de base (1) de façon à pouvoir exécuter supplémentairement un mouvement de compensation horizontal perpendiculaire à l'axe longitudinal (6) du tube et vertical et est logée à cette fin de façon verticalement mobile dans un cadre de guidage (7) et est déplaçable avec celui-ci, perpendiculairement à l'axe de tube (6), le cadre de guidage (7) prenant appui de façon mobile en rotation, sur des douilles de guidage (9) d'un guidage de coulissement (10) orienté dans le sens de l'axe de tube, par l'intermédiaire de bras de retenue (8) latéralement en porte-à-faux.

2. Machine de raccordement par vissage à l'aide de manchons selon la revendication 1, caractérisée en ce que la pince de tube (4) est montée mobile et la pince de raccordement par vissage (5) est montée fixe.

3. Machine de raccordement par vissage à l'aide de manchons selon la revendication 2, caractérisée en ce que la pince de tube (4) est équipée d'éléments pour assurer une compensation du poids de la pince de tube lors de l'abaissement vertical.

4. Machine de raccordement par vissage à l'aide de manchons selon la revendication 3, caractérisée en ce que, pour la compensation du poids de la pince de tube, sont utilisés des ressorts (30) ou des éléments à effet hydraulique.

5. Machine de raccordement par vissage à l'aide de manchons selon l'une des revendications 1 à 4, caractérisée en ce que les axes (11) des éléments de support mobiles en rotation des bras de retenue (8) se trouvent dans le plan horizontal (12) de l'axe de tube (6).

6. Machine de raccordement par vissage à l'aide de manchons selon l'une des revendications 1 à 4, caractérisée en ce que les extrémités extérieures des bras de retenue (8) sont reliées les unes aux autres par des barres (13) qui sont logées dans des barrettes de liaison en forme de bielles (14) des douilles de guidage (9).

7. Machine de raccordement par vissage à l'aide de manchons selon l'une des revendications 1 à 6, caractérisée en ce que les bras de retenue (8) sont configurés pour présenter une forme en V en s'étendant au-delà du tube à raccorder.

8. Machine de raccordement par vissage à l'aide de manchons selon l'une des revendications 1 à 7, caractérisée en ce que la pince de tube (4) présente un boîtier en acier massif, qui sert pour la réception des mâchoires de serrage, des leviers de serrage et des cylindres ou vérins de serrage.

9. Machine de raccordement par vissage à l'aide de manchons selon l'une des revendications 1 à 8, caractérisée en ce que la pince de tube (4) est pourvue de rouleaux de guidage (15) qui s'engagent dans des pièces de guidage (16) pourvues de rainures de guidage verticales (17) et disposées sur le cadre de guidage.

10. Machine de raccordement par vissage à l'aide de manchons selon l'une des revendications 1 à 9, caractérisée en ce que la pince de tube (4) est pourvue sur ses côtés orientés dans le sens de glissement, de plaques de guidage (18), par l'intermédiaire desquelles elle est appliquée à des boulons de guidage (19) du cadre de guidage (7).

11. Machine de raccordement par vissage à l'aide de manchons selon l'une des revendications 1 à 10, caractérisée en ce que le cadre de guidage (7) est déplaçable par des vérins d'avance ou poussoirs hydrauliques (20) sur le guidage de coulissement (10).

12. Machine de raccordement par vissage à l'aide de manchons selon l'une des revendications 1 à 11, caractérisée en ce qu'en dessous de la pince de tube (4) est disposé un vérin de levage hydraulique (21) pour déplacement vertical de celle-ci à l'intérieur du cadre de guidage (7).

13. Machine de raccordement par vissage à l'aide de manchons selon l'une des revendications 1 à 12, caractérisée en ce que la pince de raccordement par vissage (5) est fixée à un boîtier de machine diposé de façon fixe sur le cadre de base (1), de façon basculante par l'intermédiaire d'une couronne rotative à billes (23).

14. Machine de raccordement par vissage à l'aide de manchons selon l'une des revendications 1 à 13, caractérisée en ce que l'extrémité inférieure de la pince de raccordement par vissage (5) est pourvue d'une boîte de mesure (23) de traction pour une mesure de couple.

15. Pince de raccordement par vissage à l'aide de manchons selon l'une des revendications 1 à 14, caractérisée en ce que la pince de raccordement par vissage (5) est susceptible d'être entraînée par un engrenage hydrostatique (24).

16. Machine de raccordement par vissage à l'aide de manchons selon l'une des revendications 1 à 14, caractérisée en ce que la pince de raccordement par vissage (5) est susceptible d'être entraînée par un moteur à courant continu réglable.

17. Machine de raccordement par vissage à l'aide de manchons selon l'une des revendications 1 à 15, caractérisée en ce que la pince de raccordement par vissage (5) est réglable à niveau à l'aide d'un entraînement de réglage électriquement actionnable.

18. Machine de raccordement par vissage de manchons selon l'une des revendications 1 à 17, caractérisée en ce que des générateurs de signaux sont disposés pour l'établissement d'un chemin de vissage prédéterminé.

19. Machine de raccordement par vissage à l'aide de manchons selon la revendication 18, caractérisée en ce qu'une installation à barrière lumineuse est utilisée comme générateur ou transmetteur de signaux.

20. Machine de raccordement par vissage à l'aide de manchons selon la revendication 18, caractérisée en ce qu'un commutateur de position extrême est utilisé comme générateur ou transmetteur de signaux.

21. Machine de raccordement par vissage à l'aide de manchons selon l'une des revendications 1 à 20, caractérisée en ce que la pince de raccordement par vissage est équipée d'un dispositif de freinage (31) pouvant être entraîné par la force d'un moteur, pour l'introduction du serrage de manchon par l'intermédiaire du système de serrage disposé dans la pince de raccordement par vissage, le dispositif de freinage pouvant être mis en service après l'introduction achevée du serrage de manchon .

22. Machine de raccordement par vissage à l'aide de manchons selon la revendication 21, caractérisée en ce que la force de moteur peut être produite par un moteur hydraulique.

23. Machine de raccordement par vissage à l'aide de manchons selon la revendication 21, caractérisée en ce que la force de moteur peut être produite par un moteur électrique.

Fig. 1

Fig. 2

Fig. 3

Fig. 4

Fig. 5

EP 0 163 012 B1

Schnitt A - B

Fig. 6

Fig.7